Europäisches Patentamt

European Patent Office

Office européen des brevets

(11) Numéro de publication: **0 445 689 A1**

# DEMANDE DE BREVET EUROPEEN

(21) Numéro de dépôt: 91103204.3

(22) Date de dépôt: 04.03.91

(51) Int. Cl.⁵: **F16L 11/08**, F16L 11/10

(30) Priorité: 07.03.90 FR 9002862

(43) Date de publication de la demande:
11.09.91 Bulletin 91/37

(84) Etats contractants désignés:
BE DE FR GB IT NL

(71) Demandeur: FILOTEX S.A. dite
140-146, rue Eugène Delacroix
F-91210 Draveil(FR)

(72) Inventeur: Clouet, Pascal
8, rue Grande
F-77166 Gregy Sur Yerres(FR)
Inventeur: Viaud, André
3, rue de Beauregard
F-91560 Crosne(FR)

(74) Mandataire: Weinmiller, Jürgen et al
Lennéstrasse 9 Postfach 24
W-8133 Feldafing(DE)

(54) Dispositif de renfort résistant à la traction pour une canalisation souple.

(57) La présente invention concerne un dispositif de renfort résistant à la traction pour une canalisation souple.

Le dispositif de renfort résistant à la traction pour une canalisation souple selon l'invention comprend une tresse (3), des éléments de renfort longitudinaux (8) étant disposés dans l'épaisseur de cette tresse.

EP 0 445 689 A1

La présente invention concerne un dispositif de renfort résistant à la traction pour une canalisation souple.

Les canalisations souples telles que les câbles électriques ou les câbles à fibres optiques tendent à s'allonger sous un effort de traction dû, par exemple, à leur propre poids ou à une charge qu'elles supportent. Il est ainsi connu, pour limiter cet allongement, de disposer un filin au centre d'un câble. Cette solution s'applique uniquement si le câble comporte plusieurs conducteurs répartis autour de ce filin. De plus, l'amarrage de ce dispositif de renfort aux deux extrémités du câble, sur des connecteurs par exemple, est difficile à réaliser du fait de sa position centrale. Une solution voisine s'applique aux câbles monoconducteurs tels que les câbles coaxiaux. Dans ce cas, c'est l'âme du conducteur central qui est réalisé dans un matériau à caractéristiques mécaniques appropriées. Cette solution présente l'inconvénient de faire intervenir des considérations mécaniques dans la définition d'un câble dont la géométrie est normalement fixée par des considérations électriques.

Dans les deux cas précédents, l'incorporation d'un dispositif de renfort unique peut diminuer considérablement la souplesse du câble si la section de cet élément est importante. Dans les câbles à plusieurs conducteurs, il est donc courant d'assembler plusieurs filins en complément de ces conducteurs. Cet assemblage étant hélicoïdal pour assurer la souplesse du câble, la longueur d'un filin est supérieure à celle du câble et, sous l'effet d'un effort de traction, le câble aura tendance à s'allonger. En outre l'amarrage de ces filins à leurs extrémités est également difficile à réaliser.

La présente invention a ainsi pour objet un dispositif de renfort résistant à la traction qui réduit l'allongement d'une canalisation souple soumise à un effort sans en limiter la souplesse.

Le dispositif de renfort résistant à la traction pour une canalisation souple selon l'invention comprend une tresse entourant l'axe de cette canalisation, des éléments de renfort longitudinaux étant disposés dans l'épaisseur de cette tresse.

De plus, dans le dispositif de renfort résistant à la traction pour une canalisation souple, la tresse est métallique.

Dans une variante, le dispositif de renfort résistant à la traction pour une canalisation souple se caractérise en ce que la tresse est réalisée à partir de fibre.

Par ailleurs, dans le dispositif de renfort résistant à la traction pour une canalisation souple, les éléments de renfort longitudinaux sont disposés parallèlement à l'axe de la canalisation.

Selon une première option, le dispositif de renfort résistant à la traction pour une canalisation souple se caractérise en ce que les éléments de renfort sont des fils.

Selon une deuxième option, le dispositif de renfort résistant à la traction pour une canalisation souple se caractérise en ce que les éléments de renfort sont des rubans.

Avantageusement, dans le dispositif de renfort résistant à la traction pour une canalisation souple, les éléments de renfort sont soit métalliques soit en fibres.

Les différents objets et caractéristiques de l'invention ressortiront maintenant avec plus de détails dans le cadre d'exemples de réalisation donnés à titre non limitatif en se référant aux figures annexées qui représentent :

- la figure 1, une vue en perspective du dispositif de renfort de l'invention où le corps est une tresse,
- la figure 2, une vue en coupe de ce même dispositif.

Les éléments présents dans les deux figures porteront une seule référence.

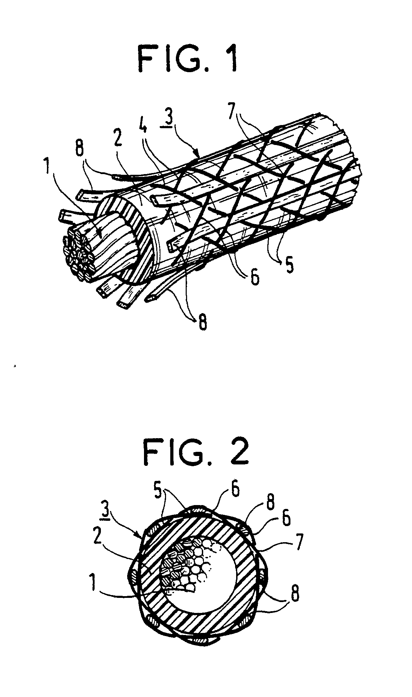

Le dispositif de renfort résistant à la traction de l'invention trouve une application avantageuse dans le domaine des câbles. Un câble équipé du dispositif est donc représenté en perspective à la figure 1 et en coupe à la figure 2.

Le câble proprement dit comporte un faisceau 1 de conducteurs ou de fibres optiques, par exemple, enserré dans une gaine 2 de protection en matériau souple.

Le dispositif de renfort entoure cette gaine 2. Il comprend un corps qui, dans ce cas, est une tresse 3 cylindrique formée de brins 4 entrelacés. Ces brins peuvent être métalliques ou réalisés à partir de fibres naturelles ou synthétiques. Cette tresse peut se décomposer en une nappe intérieure 5 qui comprend toutes les portions de brins en contact avec la gaine 2 et une nappe extérieure 6 qui comprend toutes les portions de brins formant la surface externe de cette tresse. Ces deux nappes présentent donc des points de contact 7 où elles se confondent.

Des éléments de renfort 8 sont introduits dans l'épaisseur de la tresse entre les deux nappes 5, 6, c'est-à-dire qu'ils passent entre deux points de contact 7 adjacents. Ces éléments 8 apparaissent dans les figures sous la forme de fils sensiblement cylindriques. Ils peuvent prendre une toute autre forme, celle d'un ruban, par exemple, sans sortir du cadre de l'invention. Ils sont caractérisés par une forme longiligne.

Ces éléments de renfort 8 sont réalisés dans un matériau possédant une très bonne résistance à la traction. Ce matériau peut être notamment un métal, une fibre naturelle ou un produit de synthèse telle que de la fibre de carbone ou de la fibre aramide. Les éléments 8 limitent donc l'allongement du câble sous un effort de traction. Ils limitent, par conséquent, l'écrasement résultant d'un allongement important, ce qui permet d'utiliser pour le câble proprement dit des matériaux à faible résistance en compression. Ainsi, dans les câbles coaxiaux, le diélectrique, un diélectrique aéré par exemple, ne subira pas de contraintes dues à l'allongement.

Les éléments de renfort 8 apparaissent comme parallèles à l'axe de la canalisation ce qui procure une efficacité maximale vis-à-vis de la résistance à la traction.

Il est cependant possible de leur donner une position différente, en fonction des performances recherchées. Les éléments de renfort 8 peuvent suivre une hélice, par exemple. Ils peuvent également se présenter sous la forme d'une succession de segments décrivant alternativement des hélices d'orientations différentes, disposition connue sous le nom de disposition SZ. Dans tous les cas, ces hélices présenteront un pas beaucoup plus grand que celui de la tresse de manière à ce que l'effet de résistance à la traction soit effectivement obtenu.

Le dispositif de par sa structure cylindrique se prête bien à un amarrage aux extrémités de la canalisation qu'il renforce. Dans le cas d'un câble, il sera aisément bridé sur une portée cylindrique d'un connecteur dont le diamètre extérieur correspond sensiblement au diamètre intérieur de la tresse.

L'invention a été présentée en rapport avec un câble. Elle apporte cependant une solution générale pour renforcer la résistance à la traction d'une structure souple et longiligne que l'on a convenu de désigner par le terme générique de canalisation souple.

## Revendications

1. Dispositif de renfort résistant à la traction pour une canalisation souple caractérisé en ce qu'il comprend une tresse (3) entourant l'axe de ladite canalisation, des éléments de renfort longitudinaux (8) étant disposés dans l'épaisseur de ladite tresse (3).

2. Dispositif de renfort résistant à la traction pour une canalisation souple selon la revendication 1, caractérisé en ce que ladite tresse est métallique.

3. Dispositif de renfort résistant à la traction pour une canalisation souple selon la revendication 1 caractérisé en ce que ladite tresse est réalisée à partir de fibres.

4. Dispositif de renfort résistant à la traction pour une canalisation souple selon l'une quelconque des revendications précédentes caractérisé en ce que lesdits éléments de renfort longitudinaux (8) sont disposés parallèlement à l'axe de ladite canalisation.

5. Dispositif de renfort résistant à la traction pour une canalisation souple selon l'une quelconque des revendications précédentes caractérisé en ce que lesdits éléments de renfort longitudinaux (8) sont des fils.

6. Dispositif de renfort résistant à la traction pour une canalisation souple selon l'une quelconque des revendications 1 à 4, caractérisé en ce que lesdits éléments de renfort longitudinaux (8) sont des rubans.

7. Dispositif de renfort résistant à la traction pour une canalisation souple selon l'une quelconque des revendications précédentes caractérisé en ce que lesdits éléments de renfort longitudinaux (8) sont métalliques.

8. Dispositif de renfort résistant à la traction pour une canalisation souple selon l'une quelconque des revendications 1 à 6, caractérisé en ce que lesdits éléments de renfort longitudinaux (8) sont en fibres.

# FIG. 1

# FIG. 2

4

# RAPPORT DE RECHERCHE EUROPEENNE

Office européen des brevets

Numéro de la demande

**EP 91 10 3204**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 036 674  (COPELY DEVELOPMENTS LTD.)<br>* page 4, ligne 34 - page 5, ligne 18; figures 1-2 *<br>– – – | 1,4-5,8 | F 16 L 11/08<br>F 16 L 11/10 |
| A | DE-A-3 234 730  (GREGOR)<br>* page 5, ligne 19 - page 6, ligne 10; revendications ; figures *<br>– – – – – | 1,2-5,7-8 | |

|  |  |
|---|---|
|  | DOMAINES TECHNIQUES RECHERCHES (Int. Cl.5)<br><br>F 16 L<br>H 01 B |

Le présent rapport de recherche a été établi pour toutes les revendications

| Lieu de la recherche | Date d'achèvement de la recherche | Examinateur |
|---|---|---|
| La Haye | 21 mai 91 | NARMINIO A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons
 
& : membre de la même famille, document correspondant